# EUROPÄISCHE PATENTSCHRIFT

(11) **EP 0 851 823 B1**
(45) Veröffentlichungstag und Bekanntmachung des Hinweises auf die Patenterteilung: **07.06.2000**
(21) Anmeldenummer: 96934649.3
(22) Anmeldetag: 11.10.1996
(51) Int. Cl.: B62D 53/08

(54) **SATTELANHÄNGER MIT DIEBSTAHLSICHERUNG**
SEMITRAILER WITH ANTI-THEFT PROTECTION
SEMI-REMORQUE AVEC ANTIVOL

(30) Priorität: 14.10.1995 DE 19538306
(43) Veröffentlichungstag der Anmeldung: 08.07.1998
(73) Patentinhaber: IT-Consulting AG, 6330 Cham (CH)
(72) Erfinder: Schulz, Gerd, 34289 Zierenberg (CH)
(74) Vertreter: Vonnemann, Gerhard, Dr.-Ing.
(86) Internationale Anmeldenummer: EP9604436
(87) Internationale Veröffentlichungsnummer: WO9714604

(56) Entgegenhaltungen:
- DE-C- 4 429 125
- FR-A- 2 587 662
- GB-A- 2 256 176
- US-A- 4 614 357

## Beschreibung

Die Erfindung betrifft einen Sattelanhänger mit Diebstahlsicherung, die das Aufsatteln des abgestellten Sattelanhängers auf eine Sattelzugmaschine durch unbefugte Personen verhindern, indem der Sattelanhänger eine Sperrvorrichtung mit einem Sicherungselement aufweist, das durch ein Betätigungsmittel in den Bereich eines Zugsattelzapfens bewegbar ist und das in einer Sperrstellung das Hineingleiten des Zugsattelzapfens in eine Sattelkupplung verhindert.

Sattelanhänger, unter die auch Bezeichnungen wie Semitrailer oder Container Chassis fallen, sind im vorderen Fahrgestellbereich mit einem Zugsattelzapfen, der auch unter dem Namen Königszapfen oder King Pin bekannt ist, insbesondere nach DIN 74080 bzw. ISO 337 versehen. Mit einer solcher Einrichtung kann über eine Sattelzugmaschine mit einer Sattelkupplung, insbesondere nach DIN 74081, der Sattelanhänger aufgenommen und im öffentlichen Straßenverkehr problemlos transportiert werden.

Es ist bekannt, Sattelanhänger mit einer Diebstahlsicherung auszurüsten, die verhindert, daß der vorübergehend abgestellte Sattelanhänger von unbefugten Personen mit einer Sattelzugmaschine entwendet wird.

Diebstahlsicherungen einer bekannter Bauart umschließen zylindrisch den Zugsattelzapfen und werden mit einem Zylinderschloß gegen Entnahme gesichert. Der umschlossene Zugsattelzapfen kann nicht mehr in die Sattelkupplung eingeführt werden. Diese bekannten Diebstahlsicherungen haben den Nachteil, daß der Fahrer die Sicherungseinheit manuell am Zugsattelzapfen befestigen und verschließen muß. Die Befestigung erfolgt von unten in unbequemer Stellung, wobei die Sicherungseinheit und die Hände oder Handschuhe mit Fett und Straßenschmutz verunreinigt werden. Dies gilt in besonderem Maße bei der Befestigung der Sicherungseinheit während der Dunkelheit. Die Sicherungseinheit verschmutzt außerdem den Platz, an dem sie bei Nichtgebrauch deponiert wird. Nach Gebrauch können die Verschmutzungen nur mit erheblichen Aufwand beseitigt werden. Dieser Vorgang ist für den Fahrer derart lästig, daß er in vielen Fällen darauf verzichten wird, die Sicherung anzubringen.

Aus der FR-A-2 567 662 ist eine Diebstahlsicherung mit einem in den Bereich des Zugsattelzapfens schwenkbaren Sicherungselement bekannt, das per Hand direkt am Sattelanhänger betätigt werden muß. Nachteilig an dieser bekannten Diebstahlsicherung ist wiederum die Handbetätigung wegen der oben genannten Unbequemlichkeiten und der sich daraus ergebenden Folgen.

Aus der gattungsbildenden US-A-4 614 357 ist eine Diebstahlsicherung für Sattelanhänger mit einem verschiebbar geführten Sicherungselement bekannt, das mittels einer auf einen Kulissenmechanismus wirkenden Kolben-Zylinder-Einheit von oben nach unten in den Bereich des Zugsattelzapfens verschiebbar ist. In dieser Stellung wird das Sicherungselement indirekt von einer auf den Kulissenmechanismus einwirkenden Feder festgehalten. Diese bekannte Diebstahlsicherung hat den Nachteil, daß Manipulationen mit dem Ziel der Entriegelung des Kulissenmechanismus nicht sicher verhindert werden. Beispielsweise könnten Unbefugte mittels eines Werkzeugs von außen durch den Spalt zwischen dem Sicherungselement und dem Gehäuse eingreifen und den Kulissenmechnismus entgegen der Federkraft entriegeln.

Aus der DE-C-44 29 125 ist eine Diebstahlsicherung mit einer Auffahrschiene bekannt, die in der Sperrstellung durch einen schwenkbaren Riegel verriegelbar ist. Der Riegel ist mittels einer durch ein Schloß zu sichernden Handkurbel betätigbar. Aber auch bei dieser Anordnung besteht die Gefahr, daß der Riegel durch unbefugte Manipulationen aus der Sperrstellung gebracht und die dann entsperrte Auffahrschiene eingeklappt wird.

Aufgabe der Erfindung ist es, einen Sattelanhänger mit einer einfach und bequem betätigbaren Diebstahlsicherung anzugeben, die einen wirkungsvollen Schutz gegen Manipulationen Unbefugter aufweist.

Die erfindungsgemäße Lösung der Aufgabe sieht vor, daß das Sicherungselement in der Sperrstellung durch einen schwenkbaren Riegel verriegelbar ist und daß ein drehbar angeordnetes Blockierelement vorgesehen ist, das nach Art einer Nockenscheibe beim Drehen den Riegel verschwenkt und in der Verriegelungsstellung blockiert.

Der Erfindungsgegenstand hat einerseits den Vorteil, daß die Sperrvorrichtung fest am Sattelanhänger installiert ist und vom Fahrer lediglich betätigt werden muß. Die Betätigungsmittel für das Sicherungselement erlauben eine bequeme und einfache Betätigung der Sperrvorrichtung durch den Fahrer, ohne daß er sich unter den Sattelanhänger begeben müßte. Aufgrund der einfachen Bedienung wird der Fahrer die Sperrvorrichtung bei Bedarf jederzeit ohne Mühe betätigen, so daß der Sattelanhänger bei Nichtgebrauch niemals ungesichert abgestellt wird.

Andererseits hat die erfindungsgemäße Diebstahlsicherung den Vorteil, daß ein gewaltsames Zurückschieben des Sicherungskeils aus der Sperrstellung durch unbefugte Personen aufgrund des mit dem Blockierelement blockierten Riegels besonders wirkungsvoll verhindert wird. Bei einem Versuch, den Sicherungskeil aus der Sperrstellung gewaltsam zurückzuschieben, drückt dieser gegen den Riegel, wobei die auf den Riegel ausgeübte Kraft vom Berührungspunkt direkt auf das Drehlager des Riegels zeigt. Dabei entsteht im wesentlichen kein Drehmoment, das den Riegel aus der Verriegelungsstellung herausdrehen könnte.

Durch die Ausbildung des Profils der Nockenscheibe kann man eine variable Hebeluntersetzung erzielen, so daß bei zunehmenden Drehwinkel des Blockierelements die Bewegung des Riegels immer kleiner und die auf ihn ausgeübte Kraft immer größer wird. In der Verriegelungsstellung des Riegels und der Blockierstellung des Blockierelements ist wiederum die zwischen Blockierelement und Riegel ausgeübte Kraft vom Berührpunkt direkt auf das Drehlager des Blockierelements gerichtet, so daß im wesentlichen kein Drehmoment erzeugt wird.

In einer bevorzugten Ausführungsform ist vorgesehen, daß das Betätigungsmittel bei jedem Abkuppeln der Sattelzugmaschine automatisch aktiviert wird und das Sicherungselement sofort in die Sperrstellung bringt. Dies hat den Vorteil, daß der Fahrer die Sperrvorrichtung zum Absperren nicht einmal selbst aktiv betätigen muß. Das Absperren wird dadurch noch bequemer und es kann nicht mehr vergessen werden.

In einer einfachen Ausführungsform ist vorgesehen, daß das Sicherungselement gelenkig befestigt und durch das Betätigungsmittel in eine Sperrstellung im Bereich des Zugsattelzapfens schwenkbar ist. Diese Anordnung erfordert nur einen geringen Konstruktionsaufwand, insbesondere im Hinblick auf das Betätigungsmittel.

Eine bevorzugte Ausführungsform sieht vor, daß das Sicherungselement hinter einer den Zugsattelzapfen tragenden Sattelplatte angeordnet und durch eine Öffnung der Sattelplatte nach unten hinaus in die Sperrstellung schwenkbar ist. In der Sperrstellung taucht das Sicherungselement in den Bereich des Zugsattelzapfens unter der Sattelplatte hinein, wo es das Ankuppeln einer Sattelkupplung an den Zugsattelzapfen wirksam verhindert. In der Lösestellung ist das Sicherungselement nach oben geschwenkt und verschwindet hinter der Sattelplatte im Inneren des Sattelanhängers, wo es einerseits nicht stören kann und andererseits vor Verschmutzung und Beschädigung geschützt ist.

In einer Weiterbildung der Erfindung ist als Betätigungsmittel ein in Sperrichtung des Sicherungselements vorgespannter und in Löserichtung mittels einer pneumatischen Kolben-Zylinder-Einheit betätigbarer Federspeicher vorgesehen. Eine pneumatische Betätigung empfiehlt sich insbesondere, da der Sattelanhänger ohnehin mit einer Druckluftanlage für die Bremsen ausgestattet ist. Der Federspeicher speichert die für die Betätigung der Sperrvorrichtung erforderliche Energie, so daß die Diebstahlsicherung auch ohne Luftdruck aktiviert werden kann.

Die Erfindung wird noch verbessert, durch die Maßnahme, daß der Federspeicher beim Abkuppeln des Motorwagens automatisch ausgelöst und das Sicherungselement in Sperrstellung gebracht wird. Dadurch ist auf einfache Weise die Aktivierung der Diebstahlsicherung stets gewährleistet und kann vom Fahrer nicht mehr vergessen werden. Die Betätigung der Diebstahlsicherung kann beispielsweise durch das Abkuppeln der Druckluftschläuche oder der elektrischen Leitungen oder durch das Auskuppeln des Zugsattelzapfens ausgelöst werden.

In Ausgestaltung der Erfindung ist das Sicherungselement als Sicherungskeil ausgebildet, bei dem zumindest ein durch die Öffnung (13) nach unten ausschwenkbarer Abschnitt im wesentlichen keilförmig ist. Diese Form hält mit ihrer im wesentlichen vertikalen Stirnfläche eine heranfahrende Sattelkupplung besonders wirkungsvoll zurück und blockiert andererseits nicht eine bereits eingekuppelte Sattelkupplung, wenn die Sperrvorrichtung aus Versehen nach dem Einkuppeln betätigt wird.

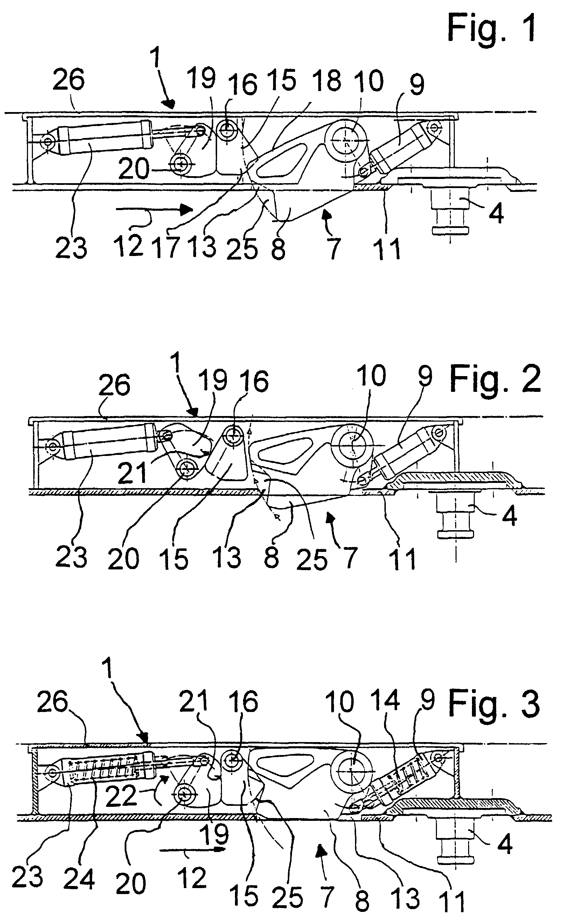

Der Sicherungskeil kann aber auch anders als in der Darstellung der Figuren 1 bis 3 so angeordnet sein, daß seine Stirnfläche dem Zugsattelzapfen zugewandt ist. In diesem Fall würde eine heranfahrende Sattelkupplung an der schrägen Rampenfläche des Sicherungskeils entlanggleiten, wobei der Sattelanhänger angehoben und damit der Zugsattelzapfen aus dem Bereich der Sattelkupplung nach oben herausbewegt wird. Bei dieser Funktionsweise kommen selbstverständlich auch andere Profilformen für den Sicherungskeil infrage, die strenggenommen nicht keilförmig sind, sondern lediglich eine Rampenfläche aufweisen, die beispielsweise gebogen, insbesondere teilkreisförmig sein kann.

In einer bevorzugten Ausführungsform ist der schwenkbare Riegel von einem Drehlager im wesentlichen nach unten hängend angeordnet und zum Verriegeln in Richtung auf den Sicherungskeil schwenkbar, so daß das schwenkbare Ende des Riegels zumindest teilweise über die Rückseite des in Sperrstellung nach unten geschwenkten Sicherungskeils tritt.

In einer bevorzugten Ausführungsform ist vorgesehen, daß das Blockierelement durch ein zweites Betätigungsmittel drehbar ist. Auf diese Weise kann das Blockierelement genauso wie der Sicherungskeil ferngesteuert betätigt werden.

Die Anordnung wird noch verbessert, indem als zweites Betätigungsmittel ein in Blockierrichtung des Blockierelements vorgespannter und entgegen der Blockierrichtung mittels einer pneumatischen Kolben-Zylinder-Einheit betätigbarer zweiter Federspeicher vorgesehen ist. Dabei kann wiederum die Energie für die Betätigung des Blockierelement im Federspeicher gespeichert werden, so daß bei Ausfall der Druckluftversorgung ein sicheres Blockieren gewährleistet ist.

In einer Weiterbildung der Erfindung ist vorgesehen, daß der Sicherungskeil eine Ausnehmung aufweist, in die in der Lösestellung des Sicherungskeils der schwenkbare Riegel einschwenkbar ist, um den Sicherungskeil auch in seiner Lösestellung zu verriegeln. Diese Maßnahme ermöglicht die doppelte Ausnutzung der Funktion des Riegels, wobei eine weitere Verriegelungsvorrichtung zur Verriegelung des Sicherungskeil in seiner Lösestellung eingespart wird.

Um die Manipulation der Diebstahlsicherung durch unbefugte Personen zu verhindern ist vorgesehen, daß die Sperrvorrichtung mit allen Komponenten für die Betätigung, Sicherung, Verriegelung und Blockierung unzugänglich in einem Gehäuse angeordnet ist.

Eine weitere Verbesserung erreicht man damit, daß das Gehäuse nach der Montage in der Sperrvorrichtung zugeschweißt ist. Ein derartig gesicherter Sattelanhänger kann - wenn überhaupt - nur noch unter Einsatz eines Schweißgerätes gestohlen werden.

In einer bevorzugten Ausführungsform der Erfindung ist eine Steueranlage zur koordinierten Steuerung der Komponenten der Sperrvorrichtung vorgesehen, um die Sperrvorrichtung in Sperrstellung zu bringen oder zu entsperren. Eine derartige Steueranlage kann beispielsweise zur koordinierten Betätigung der pneumatischen Federspeicher dienen. Dabei müßte zum Lösen des Sicherungskeils zunächst das Blockierelement mittels des zweiten Federspeichers aus der Blockierstellung heraus bewegt werden, wobei sich der Riegel aus der Verriegelungsstellung heraus bewegt. Danach müßte der erste Federspeicher pneumatisch gespannt werden, um den Sicherungskeil in die Lösestellung zu bringen. Schließlich muß der Luftdruck am zweiten Federspeicherzylinder wieder zurückgenommen werden, damit der Federspeicher das Blockierstellung und den Riegel wieder in die Verriegelungsstellung bringt.

Dabei ist es besonders vorteilhaft, wenn die Steueranlage pneumatische, elektrische und manuelle Steuermittel umfaßt. Zur Betätigung von Sicherungskeil und Blockierelement können neben den bereits erwähnten pneumatischen Betätigungsmitteln auch elektrische oder manuelle verwendet werden. Elektrische Steuermittel können beispielsweise in einer Programmsteuerung oder in einer elektrischen Betätigung pneumatischer Ventile bestehen. Ein manuelles Steuermittel kann insbesondere aus einem schlüsselbetätigten Schloß bestehen, das wiederum über elektrische oder pneumatische Steuermittel auf die Sperrvorrichtung einwirkt.

Wenn die Steueranlage in den Sattelanhänger eingebaut ist, empfiehlt es sich, daß die Steueranlage nur über einen Schlüssel, einen Code oder über Funk aktivierbar ist. Dabei trägt jedes der genannten Merkmale einzeln oder in Kombination zur Diebstahlsicherung des Sattelanhängers bei.

Weitere Vorteile und Einzelheiten der Erfindung ergeben sich aus der nachfolgenden Beschreibung von einem Ausführungsbeispiel anhand der Zeichnung.

Die Figuren zeigen im einzelnen:
- Fig. 1:: eine teilweise geschnittene Teilansicht eines Sattelanhängers mit einer erfindungsgemäßen Sperrvorrichtung in blockierter Sperrstellung,
- Fig. 2:: die Sperrvorrichtung von Fig. 1 in einer Übergangsstellung während der Betätigung,
- Fig. 3:: dieselbe Sperrvorrichtung in blockierter Lösestellung.

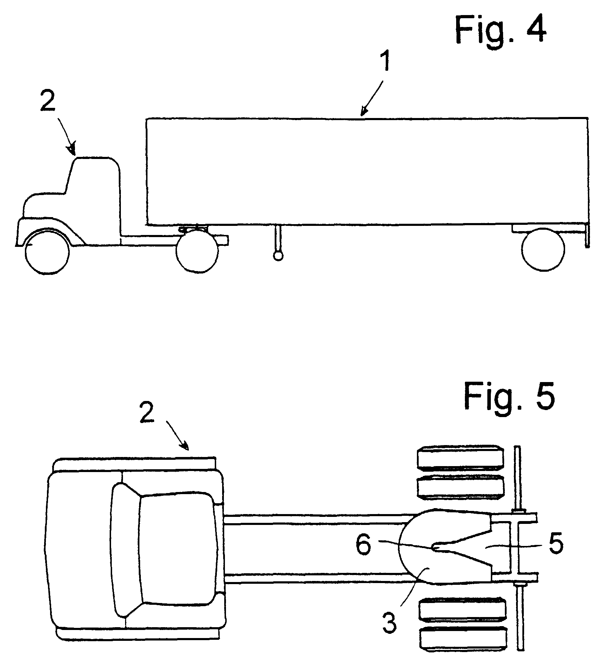

In Fig. 4 erkennt man einen Sattelanhänger 1, der auf eine Sattelzugmaschine 2 aufgesattelt ist. Eine solche Sattelzugmaschine 2 ist auch in Fig. 5 dargestellt. Sie besitzt eine Sattelkupplung 3, die zum Aufsatteln unter den Sattelanhänger 1 gefahren wird. Dabei wird ein Zugsattelzapfen 4 (Fig. 1) in eine Öffnung 5 der Sattelkupplung 3 geführt, so daß er in die Sattelkupplung 3 hineingleitet und in einer Endposition 6 arretiert werden kann.

Wie man am besten in den Fig. 1 bis 3 erkennt, ist der Sattelanhänger 1 mit einer Sperrvorrichtung 7 versehen, die das Aufsatteln des abgestellten Sattelanhängers 1 auf eine Sattelzugmaschine 2 durch unbefugte Personen verhindert. Die Sperrvorrichtung 7 besitzt ein Sicherungselement in Form eines Sicherungskeils 8, der mittels eines als Federspeicher 9 ausgebildeten ersten Betätigungsmittels in den Bereich des Zugsattelzapfens 4 schwenkbar ist. Der Sicherungskeil 8 ist an einem Drehlager 10 gelenkig befestigt und kann durch den Federspeicher 9 aus einer in Fig. 3 gezeigten Lösestellung in eine in Fig. 1 gezeigte Sperrstellung geschwenkt werden.

In der Lösestellung befindet sich der Sicherungskeil 8 hinter einer den Zugsattelzapfen 4 tragenden Sattelplatte 11, so daß der Bereich um den Zugsattelzapfen 4 herum frei zugänglich bleibt. In dieser Lösestellung könnte eine Sattelzugmaschine 2 mit ihrer Sattelkupplung 3 in Richtung des Pfeils 12 und den Sattelanhänger 1 fahren, wobei der Zugsattelzapfen 4 in die Sattelkupplung 3 hineingleitet.

In der Sattelplatte 11 ist eine Öffnung 13 vorgesehen, durch die hindurch der Sicherungskeil 8 in die Sperrstellung geschwenkt werden kann. Fig. 1 zeigt diese Situation der aktivierten Diebstahlsicherung, bei der der in Sperrstellung befindliche Sicherungskeil 8 eine Annäherung einer Sattelkupplung 3 an den Zugsattelzapfen 4, insbesondere aus der mit Pfeil 12 angedeuteten Richtung verhindert.

Der Federspeicher 9 wird durch eine Feder 14 in Löserichtung des Sicherungskeils 8 vorgespannt, so daß er im unbetätigten Zustand den Sicherungskeil 8 stets in Sperrichtung zieht. Weiterhin besitzt der Federspeicher 9 eine nicht gezeigte pneumatische Kolben-Zylinder-Einheit, die bei Beaufschlagung mit dem Luftdruck einer Druckluftanlage den Sicherungskeil 8 entgegen der Spannung der Feder 14 in Löserichtung schiebt. Eine derartige Anordnung mit dem Federspeicher 9 ist insbesondere geeignet für eine automatische Auslösung der Sperrvorrichtung 7 beim Abkuppeln der Sattelzugmaschine 2. Mit Hilfe der im Federspeicher 9 gespeicherten Energie kann auch ohne Verbindung des Sattelanhängers 1 zur Energieversorgung der Sattelzugmaschine 2 immer noch der Sicherungskeil 8 in Sperrstellung gebracht werden.

Zu der Sperrvorrichtung 7 gehört weiterhin ein Riegel 15, der in einem Drehlager 16 schwenkbar nach unten hängend angeordnet ist und zum Verriegeln des Sicherungskeils 8 dient. Dafür wird der Riegel 15 in Richtung auf den Sicherungskeil 8 geschwenkt, so daß das schwenkbare Ende 17 des Riegels 15 teilweise über die Rückseite 18 des in Sperrstellung nach unten geschwenkten Sicherungskeils 8 tritt.

Weiterhin besitzt die Sperrvorrichtung 7 ein Blockierelement 19, das in einem Drehlager 20 drehbar gelagert ist. Das Blockierelement 19 dient zum Verschwenken und Blockieren des Riegels 15, dabei wirkt eine Außenkante 21 des Blockierelements 19 nach Art einer Nockenscheibe auf den Riegel 15 ein, so daß dieser beim Drehen des Blockierelements 19 in Drehrichtung 22 den Riegel 15 aus der in Fig. 2 gezeigten Stellung in die in Fig. 3 gezeigte Verriegelungsstellung bringt. In der Verriegelungsstellung wird der Riegel 15 durch das Blockierelement 19 blockiert.

Das Blockierelement 19 wird durch einen Federspeicher 23 gedreht, der als zweites Betätigungsmittel dient. Der Federspeicher 23 ist mittels einer Feder 24 in der Blockierrichtung (entspricht Drehrichtung 22) des Blockierelements 19 vorgespannt, so daß er ohne weitere Betätigung das Blockierelement 19 mittels der in der Feder 24 gespeicherten Energie selbsttätig in die Blockierstellung bringt und dort festhält. Weiterhin besitzt der Federspeicher 23 eine nicht gezeigte pneumatische Kolben-Zylinder-Einheit, die zur Betätigung des Federspeichers 23 entgegen der Kraft der Feder 24, d.h. entgegen der Blockierrichtung des Blockierelements 19 durch Beaufschlagung mit dem Druck einer Druckluftanlage betätigt werden kann.

Der Sicherungskeil 8 besitzt eine Ausnehmung 25, in die in der Lösestellung (Fig. 3) des Sicherungskeils 8 der schwenkbare Riegel 15 einschwenkbar ist, um den Sicherungskeil 8 auch in seiner Lösestellung zu verriegeln.

Die gesamte Sperrvorrichtung 7 ist mit allen Komponenten 8, 9, 15, 19, 23 für die Betätigung, Sicherung, Verriegelung und Blockierung unzugänglich in einem Gehäuse 26 angeordnet. Das Gehäuse 26 schützt die Sperrvorrichtung 7 vor Manipulation durch unbefugte Personen. Nach der Montage der Sperrvorrichtung 7 wird das Gehäuse 26 zugeschweißt, um den Zugriff unbefugter Personen noch zu erschweren.

## Patentansprüche

1. Sattelanhänger mit Diebstahlsicherung, die das Aufsatteln des abgestellten Sattelanhängers (1) auf eine Sattelzugmaschine (2) durch unbefugte Personen verhindert, indem der Sattelanhänger (1) eine Sperrvorrichtung (7) mit einem Sicherungselement (8) aufweist, das durch ein Betätigungsmittel (9) in den Bereich eines Zugsattelzapfens (4) bewegbar ist und das in einer Sperrstellung das Hineingleiten des Zugsattelzapfens (4) in eine Sattelkupplung (3) verhindert, **dadurch gekennzeichnet**, daß das Sicherungselement (8) in der Sperrstellung durch einen schwenkbaren Riegel (15) verriegelbar ist und daß ein drehbar angeordnetes Blockierelement (19) vorgesehen ist, das nach Art einer Nockenscheibe beim Drehen den Riegel (15) verschwenkt und in der Verriegelungstellung blockiert.

2. Sattelanhänger nach Anspruch 1, **dadurch gekennzeichnet**, daß das Betätigungsmittel (9) bei jedem Abkuppeln der Sattelzugmaschine (2) automatisch aktiviert wird und das Sicherungselement (8) sofort in die Sperrstellung bringt.

3. Sattelanhänger nach Anspruch 1 oder 2, **dadurch gekennzeichnet**, daß das Sicherungselement (8) gelenkig befestigt und durch das Betätigungsmittel (9) in eine Sperrstellung im Bereich des Zugsattelzapfens (4) schwenkbar ist.

4. Sattelanhänger nach Anspruch 3, **dadurch gekennzeichnet**, daß das Sicherungselement (8) hinter einer den Zugsattelzapfen (4) tragenden Sattelplatte (11) angeordnet und durch eine Öffnung (13) der Sattelplatte (11) nach unten hinaus in die Sperrstellung schwenkbar ist.

5. Sattelanhänger nach einem der Ansprüche 1 bis 4, **dadurch gekennzeichnet**, daß als Betätigungsmittel ein in Sperrichtung des Sicherungselements (8) vorgespannter und in Löserichtung mittels einer pneumatischen Kolben-Zylinder-Einheit betätigbarer Federspeicher (9) vorgesehen ist.

6. Sattelanhänger nach Anspruch 5, **dadurch gekennzeichnet**, daß der Federspeicher (9) beim Abkuppeln der Sattelzugmaschine (2) automatisch ausgelöst und das Sicherungselement (8) in Sperrstellung gebracht wird.

7. Sattelanhänger nach einem der Ansprüche 1 bis 6, **dadurch gekennzeichnet**, daß das Sicherungselement als Sicherungskeil (8) ausgebildet ist, bei dem zumindest ein durch die Öffnung (13) nach unten ausschwenkbarer Abschnitt im wesentlichen keilförmig ist.

8. Sattelanhänger nach Anspruch 7, **dadurch gekennzeichnet**, daß der schwenkbare Riegel (15) von einem Drehlager (16) im wesentlichen nach unten hängend angeordnet und zum Verriegeln in Richtung auf den Sicherungskeil (8) schwenkbar ist, so daß das schwenkbare Ende (17) des Riegels (15) zumindest teilweise über die Rückseite (18) des in Sperrstellung nach unten geschwenkten Sicherungskeils (8) tritt.

9. Sattelanhänger nach einem der Ansprüche 1 bis 8, **dadurch gekennzeichnet**, daß das Blockierelement (19) durch ein zweites Betätigungsmittel (23) drehbar ist.

10. Sattelanhänger nach Anspruch 9, **dadurch gekennzeichnet**, daß als zweites Betätigungsmittel ein in Blockierrichtung des Blockierelements (19) vorgespannter und entgegen der Blockierrichtung mittels einer pneumatischen Kolben-Zylinder-Einheit betätigbarer zweiter Federspeicher (23) vorgesehen ist.

11. Sattelanhänger nach einem der Ansprüche 8 bis 10, **dadurch gekennzeichnet**, daß der Sicherungskeil (8) eine Ausnehmung (25) aufweist, in die in der Lösestellung des Sicherungskeils (8) der schwenkbare Riegel (15) einschwenkbar ist, um den Sicherungskeil (8) auch in seiner Lösestellung zu verriegeln.

12. Sattelanhänger nach einem der Ansprüche 1 bis 11, **dadurch gekennzeichnet**, daß die Sperrvorrichtung (7) mit allen Komponenten (8,9,15,19,23) für die Betätigung, Sicherung, Verriegelung und Blockierung unzugänglich in einem Gehäuse (26) angeordnet ist.

13. Sattelanhänger nach Anspruch 12, **dadurch gekennzeichnet**, daß das Gehäuse (26) nach der Montage der Sperrvorrichtung (7) zugeschweißt ist.

14. Sattelanhänger nach einem der Ansprüche 1 bis 13, **dadurch gekennzeichnet**, daß eine Steueranlage zur koordinierten Steuerung der Komponenten der Sperrvorrichtung (7) vorgesehen ist, um die Sperrvorrichtung (7) in Sperrstellung zu bringen oder zu entsperren.

15. Sattelanhänger nach Anspruch 14, **dadurch gekennzeichnet**, daß die Steueranlage pneumatische elektrische und manuelle Betätigungs- und Steuermittel umfaßt.

16. Sattelanhänger nach Anspruch 14 oder 15, **dadurch gekennzeichnet,** daß die Steueranlage nur über einen Schlüssel, einen Code oder über Funk aktivierbar ist.

## Claims

1. A semitrailer with anti-theft device which prevents the dismounted semitrailer (1) from being mounted on a semitrailer tractor (2) by unauthorised persons, by the semitrailer (1) having a locking device (7) with a securing element (8) which is movable by an actuating means (9) into the region of a fifth-wheel coupling pin (4) and which in a locking position prevents the fifth-wheel coupling pin (4) from sliding into a fifth-wheel coupling (3), characterised in that the securing element (8) is lockable in the locking position by a pivotable lock member (15) and that there is provided a rotatably arranged blocking element (19) which in the manner of a cam disc upon rotation pivots the lock member (15) and blocks it in the lock position thereof.

2. A semitrialer according to claim 1 characterised in that the actuating means (9) is automatically activated whenever the semitrailer tractor (2) is uncoupled and moves the securing element (8) immediately into the locking position.

3. A semitrailer according to claim 1 or claim 2 characterised in that the securing element (8) is hingedly fixed and is pivotable by the actuating means (9) into a locking position in the region of the fifth-wheel coupling pin (4).

4. A semitrailer according to claim 3 characterised in that the securing element (8) is arranged behind a fifth-wheel plate (11) carrying the fifth-wheel coupling pin (4) and is pivotable downwardly into the locking position through an opening (13) in the fifth-wheel plate (11).

5. A semitrailer according to one of claims 1 to 4 characterised in that the actuating means is a spring storage device (9) which is biased in the locking direction of the securing element (8) and which is actuable in the release direction by means of a pneumatic piston-cylinder unit.

6. A semitrailer according to claim 5 characterised in that the spring storage device (9) is automatically triggered upon uncoupling of the semitrailer tractor (2) and the securing element (8) is moved into the locking position.

7. A semitrailer according to one of claims 1 to 6 characterised in that the securing element is in the form of a securing wedge (8) in which at least one portion which can be extended by a downward pivotal movement through the opening (13) is substantially wedge-shaped.

8. A semitrailer according to claim 7 characterised in that the pivotable lock member (15) is arranged hanging substantially downwardly from a rotary mounting (16) and is pivotable for locking purposes in a direction towards the securing wedge (8) so that the pivotable end (17) of the lock member (15) passes at least partially over the rear side (18) of the securing wedge (8) when pivoted downwardly into the locking position.

9. A semitrailer according to one of claims 1 to 8 characterised in that the blocking element (19) is rotatable by a second actuating means (23).

10. A semitrailer according to claim 9 characterised in that provided as a second actuating means is a second spring storage device (23) which is biased in the blocking direction of the blocking element (19) and which can be actuated in opposite relationship to the blocking direction by means of a pneumatic piston-cylinder unit.

11. A semitrailer according to one of claims 8 to 10 characterised in that the securing wedge (8) has a recess (25) into which in the release position of the securing wedge (8) the pivotable lock member (15) can be pivoted in order also to lock the securing wedge (8) in its release position.

12. A semitrailer according to one of claims 1 to 11 characterised in that the locking device (7) with all components (8, 9, 15, 19, 23) for actuation, securing, locking and blocking is inaccessibly arranged in a housing (26).

13. A semitrailer according to claim 12 characterised in that the housing (26) is welded closed after fitting of the locking device (7).

14. A semitrailer according to one of claims 1 to 13 characterised in that there is provided a control installation for the co-ordinated control of the components of the locking device (7) in order to bring the locking device (7) into the locking position or to unlock it.

15. A semitrailer according to claim 14 characterised in that the control installation includes pneumatic, electrical and manual actuating and control means.

16. A semitrailer according to claim 14 or claim 15 characterised in that the control installation is activatable only by way of a key, a code or by radio.

## Revendications

1. Semi-remorque équipée d'une sécurité antivol empêchant une personne non autorisée d'atteler à un tracteur (2) la semi-remorque remisée (1) , cette dernière portant un dispositif d'arrêt (7) équipé d'un élément de sécurité (8) qui peut être amené dans la zone d'un pivot de remorquage (4) par un organe de manoeuvre (9) pour occuper une position d'arrêt dans laquelle il empêche le glissement du pivot de remorquage (4) dans l'accouplement de remorquage (3) d'un tracteur,
caractérisée en ce que
l'élément de sécurité (8) peut être verrouillé en position d'arrêt par un verrou basculant (15) et il est prévu un élément de blocage (19) pivotant qui, lorsque tourne le verrou (15), bascule à la manière d'un disque de came et bloque le verrou en position de verrouillage.

2. Semi-remorque selon la revendication 1,
caractérisée en ce que
l'organe de manoeuvre (9), lorsqu'on désaccouple le tracteur (2), est automatiquement activé et amène automatiquement l'élément de sécurité (8) en position d'arrêt.

3. Semi-remorque selon les revendications 1 ou 2,
caractérisée en ce que
l'élément de sécurité (8) est monté avec articulation et l'organe de manoeuvre (9) peut le faire basculer pour l'amener en position d'arrêt dans la zone du pivot de remorquage (4) .

4. Semi-remorque selon la revendication 3,
caractérisée en ce que
l'élément de sécurité (8) est monté derrière une plaque de remorque (11) portant le pivot de remorquage (4) et peut basculer à travers une ouverture (13) de cette plaque (11), vers le bas, pour venir en position d'arrêt.

5. Semi-remorque selon une des revendications 1 à 4,
caractérisée en ce que
l'organe de manoeuvre est un accumulateur d'énergie à ressort (9) précontraint dans le sens d'arrêt de l'élément de sécurité (8) et qui peut être actionné dans le sens de dégagement par un vérin pneumatique à cylindre et piston.

6. Semi-remorque selon la revendication 5,
caractérisée en ce que
l'accumulateur d'énergie (9), quand on désaccouple le tracteur (2), est automatiquement déclenché et l'élément de sécurité (8) est amené en position d'arrêt.

7. Semi-remorque selon une des revendications 1 à 6,
caractérisée en ce que
l'élément de sécurité a la forme d'un coin de sécurité (8) dont au moins une partie qui bascule vers le bas à travers l'ouverture (13) a la forme d'un coin.

8. Semi-remorque selon la revendication 7,
caractérisée en ce que
le verrou basculant (15) monté sur un pivot de rotation (16) en pendant essentiellement vers le bas, peut pivoter vers le coin de sécurité (8) pour le verrouiller, l'extrémité basculante (17) du verrou (15) venant se placer au moins en partie au-dessus de la face arrière (18) du coin de sécurité (8) basculé vers le bas en position d'arrêt.

9. Semi-remorque selon une des revendications 1 à 8,
caractérisée en ce que
l'élément de blocage (19) peut pivoter sous l'action d'un second organe de manoeuvre (23).

10. Semi-remorque selon la revendication 9,
caractérisée en ce que
le second organe de manoeuvre est un second accumulateur d'énergie à ressort (23), précontraint dans la direction de blocage de l'élément de blocage (19) et qui peut être actionné dans le sens opposé par l'intermédiaire d'un vérin pneumatique à cylindre et piston.

11. Semi-remorque selon une des revendications 8 à 10,
caractérisée en ce que
le coin de sécurité (8) présente un évidement (25) dans lequel lorsque le coin (8) est en position de dégagement, le verrou (15) peut venir se loger par basculement de manière à verrouiller le coin de sécurité également dans sa position de dégagement.

12. Semi-remorque selon une des revendications 1 à 11,
caractérisée en ce que
le dispositif d'arrêt (7) avec tous ses composants (8, 9, 15, 19, 23) assurant la manoeuvre, la sécurité, le verrouillage et le blocage sont logés de manière inaccessible dans un boîtier (26).

13. Semi-remorque selon la revendication 12,
caractérisée en ce que
le boîtier (26) est soudé après montage du dispositif d'arrêt (7).

14. Semi-remorque selon une des revendications 1 à 13,
caractérisée en ce qu'
il est prévu une installation assurant la commande coordonnée des composants du dispositif d'arrêt (7), afin d'amener le dispositif d'arrêt (7) en position d'arrêt, ou de l'en dégager.

15. Semi-remorque selon la revendication 14,
caractérisée en ce que
l'installation de commande comprend des moyens de commande et de manoeuvre pneumatiques, électriques ou manuels.

16. Semi-remorque selon une des revendications 14 ou 15,
caractérisée en ce que
l'installation de commande ne peut être activée qu'en utilisant une clef, un codage ou une radio.
